(19) Europäisches Patentamt
European Patent Office
Office européen des brevets

(11) **EP 3 982 744 B1**

(12) **EUROPEAN PATENT SPECIFICATION**

(45) Date of publication and mention
of the grant of the patent:
**17.01.2024 Bulletin 2024/03**

(21) Application number: **20743885.4**

(22) Date of filing: **12.06.2020**

(51) International Patent Classification (IPC):
*A23C 9/16* (2006.01)     *A23L 33/00* (2016.01)
*A23P 30/20* (2016.01)

(52) Cooperative Patent Classification (CPC):
**A23P 10/40; A23C 9/16; A23L 33/40; A23P 30/20**

(86) International application number:
**PCT/NL2020/050378**

(87) International publication number:
**WO 2020/251360 (17.12.2020 Gazette 2020/51)**

(54) **GAS-INJECTION EXTRUSION FOR PRODUCING INFANT FORMULA PRODUCTS**

EXTRUSION MIT GASEINSPRITZUNG ZUR HERSTELLUNG VON
SÄUGLINGSNAHRUNGSPRODUKTEN

EXTRUSION AVEC INJECTION DE GAZ POUR PRODUCTION DE PRODUITS DE PRÉPARATION
POUR NOURRISSONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.06.2019 PCT/NL2019/050360**

(43) Date of publication of application:
**20.04.2022 Bulletin 2022/16**

(73) Proprietor: **N.V. Nutricia
2712 HM Zoetermeer (NL)**

(72) Inventors:
 • **ÜSTÜNEL, Memet Ali
 3584 CT Utrecht (NL)**
 • **JEZKOVA, Katerina
 3584 CT Utrecht (NL)**

 • **WENDT, Albe
 3584 CT Utrecht (NL)**

(74) Representative: **Nederlandsch Octrooibureau
P.O. Box 29720
2502 LS The Hague (NL)**

(56) References cited:
**WO-A1-2006/094995     WO-A1-2011/159653
WO-A1-2014/066680     US-A1- 2008 241 337
US-A1- 2015 296 867     US-A1- 2017 202 864**

Remarks:
The file contains technical information submitted after
the application was filed and not included in this
specification

**Description**

**Field of the invention**

The present invention relates to a process for manufacturing nutritional composition, in particular infant formula products thereof, by extrusion, to the nutritional compositions obtained thereby and to a modular system suitable for performing the process according to the invention.

**Background art**

Powdered nutritional compositions containing a protein component, a fat component and a carbohydrate component are well known. They are intended to be reconstituted prior to consumption with a liquid, typically. Powdered nutritional compositions include infant formulae, growing-up milks and compositions used in clinical nutrition, for example for enteral feeding. Conventionally, such products are manufactured by mixing all the ingredients with water, subjecting the liquid mixture to a thermal treatment to reduce bacterial loads, homogenising the mixture and then subjecting it to spray-drying.

Extrusion methods are highly efficient methods that significantly minimize the amount of water and energy needed and typically produce extrudates that can be dried and ground into powdered material. To date, the use of extrusion processes to produce powdered infant formulae is only very limited, see for example WO 2006/094995, WO 2011/15965653, WO 2014/066680, WO 2014/164956 and US 2008/241337. US 2015/296867 describes a method of producing an emulsion for a powdered nutritional product within an extruder. US 2017/202864 describes nutrient delivery systems comprising a pod and a nutritional powder comprising a human milk oligosaccharide or a precursor thereof. The present inventors have developed an extrusion-based process for the manufacture of infant formulae, which is cost efficient and produces excellent products.

**Summary of the invention**

The inventors have developed a process for the manufacture of infant formulae products using extrusion. In the process according to the invention, the concentrations of the aqueous streams are carefully controlled, such that each of the necessary and preferred steps are performed optimally and at the same time the amount of water that is added and the need for it to be removed afterwards to obtain a dry infant formula is minimized. Furthermore, the process according to the invention is efficient in terms of energy consumption and water use. The amount of water used to dissolve components or dilute streams is minimized and avoided where possible. As such, energyconsuming removal of water to obtain the final dry powders is also minimized.

Additionally, the introduction of gas during step (d), in combination with the spray-drying during step (e), affords infant formula products that have an increased porosity compared to prior art infant formula products, both obtained by extrusion processes and spray-drying processes. Such a product has improved characteristics over conventional infant formula products, especially in the dissolution properties. The present invention thus further provides and infant formula product obtainable by the process according to the invention, as well as the use of the infant formula product according to the invention or the process according to the invention to improve the dissolution properties of an infant formula product, in particular improved wettability and foaming characteristics.

A further advantage of the process according to the invention is that it provides little disruption of existing manufacturing processes for infant formula products wherein extrusion is not used, such that it is readily retrofitted into existing processing plants. Limited adaptation is required in terms of hardware configuration and machinery used in conventional processes that include a spray-drying step. Also, the process according to the invention is highly versatile when it comes to starting materials, and operates efficiently when the conventional starting materials for infant formula product manufacture are used. Furthermore, the process according to the invention is very well capable of taking (natural) variations in the composition of starting materials into account, since prior to the homogenisation step as used, the levels of the relevant ingredients can be monitored and adjusted as desired. Furthermore, capex costs expressed as the capital expenditure per kilogram product manufactured by the method according to the invention is very favourable.

The process of the present invention reduces the heat-load exerted on the protein component to a minimum by keeping temperatures desirably low at all stages. As such, the obtained infant formula product mimics the golden standard set by human milk to a better extent than infant formula products that are subjected to higher temperatures during processing, especially to higher extrusion temperatures.

A further advantage of the process according to the invention is that both heat-treated and non-heat treated proteins can be used as starter material as they can enter the process at different phases. Yet, proteins enter the process by contacting them with a liquid stream such that they form an integral part of the end product by forming a protective layer that surrounds the lipid component and/or by forming part of lipid-containing particles instead of being present in the infant formula product as separate particles. This is of particular relevance in preventing oxidisation of lipids via reduced exposure to air.

Also, the present process allows highly concentrated ingredients to be used in a wet mix process thereby minimizing use of water yet preventing fouling of equipment to occur.

Thus, the present invention provides a flexible, balanced yet efficient infant formula extrusion-based manufacturing process capable of using readily available ingredients, wherein a heat treatment step is performed on as much of the required proteins but with exclusion of as much of the required lipids and carbohydrates as possible, yet providing room for adding ingredients during the extrusion step if needed. Such flexibility is a benefit in view of different recipes an infant manufacturing plant is supposed to produce to tailor the demanding market and supply the full gamma of products sold using a processing line that is as straight forward and basic as possible.

The infant formulae products obtained by the process according to the invention show desirable reconstitution (dissolution) behaviour without undesirable lumping or sticking. The process of the invention provides a nutritional composition that is easily dispersible upon mixing with a liquid, typically water, to give a homogeneous liquid mixture of protein, fat and carbohydrate without visible separation of an aqueous and a non-aqueous phase.

Further, desirable low levels of free fat in the infant formula product are achieved by the process of the present invention.

## Detailed description

The process according to the invention is for manufacturing an infant formula product and comprises the following steps:

> (a) subjecting an aqueous mixture having a protein component and a carbohydrate component to a heat treatment step,
> (b) mixing the aqueous mixture with a lipid component,
> (c) subjecting the aqueous mixture comprising the lipid component, the carbohydrate component and the heat-treated protein component to a homogenization and emulsification step to obtain a homogenized oil-in-water emulsion having a total solids content in the range of 45 - 73 wt%;
> (d) conveying the homogenized emulsion into an extruder, independently adding digestible carbohydrates (e.g. lactose) and optionally dietary fibres to the extruder and extruding the contents of the extruder, wherein a gas is injected into the extruder, to obtain an extruded aerated material;
> (e) preparing an infant formula product from the extruded aerated material,

wherein the extrusion of step (d) is performed at a temperature below 75 °C and wherein the extruded aerated material contains substantially all proteins and/or lipids that are nutritionally required for an infant formula.

In one embodiment, the mixing in step (b) directly follows the heat treatment of step (a), meaning this occurs without substantial alteration of the heat treated aqueous mixture. In one embodiment, a step of increasing the total solid content of the aqueous mixture directly follows the heat treatment of step (a), meaning this occurs without substantial alteration of the heat treated aqueous mixture. In one embodiment, the mixing in step (b) directly follows a step of increasing the total solid content of the aqueous mixture, meaning this occurs without substantial alteration of the aqueous mixture with increased total solid content. In one embodiment, the homogenization and emulsification in step (c) directly follows the mixing of step (b), meaning this occurs without substantial alteration of the aqueous mixture. In one embodiment, the extrusion in step (d) directly follows the homogenisation of step (c), meaning this occurs without substantial alteration of the homogenized emulsion. In one embodiment, the preparing of step (e) directly follows the extrusion of step (d), without substantial alteration of the extruded material.

In one embodiment of the process according to the invention, step (e) involves a spray-drying step.

In one embodiment, the process according to the invention does not exceed the temperature of 75 °C, preferably 70 °C, with the exception of the heat treatment of step (a) and possibly if present the spray-drying as part of step (e). The nutrients ending up in the infant formula product are preferably not unnecessarily exposed to an undesirably high heat load. In addition to the heat treatment step, the temperature of 75 °C may also be exceeded in the spray-drying step if part of step (e). Because of the gas injection during step (d), residence times within the spray-drier can be reduced, thus reducing the heat load exposed to the final products. Further, spray-drying has been found to have limited effect on the nativity of the protein.

Preferably, the infant formula product is an infant formula, a follow-on formula, a toddler milk or a growing-up milk.

In the context of the present invention, aqueous mixtures are yielded at many stages, and used again at later stages. Such aqueous mixtures are mixtures based on water as liquid, wherein further components may be dissolved or dispersed. In the process according to the invention, the aqueous mixture undergoes several treatments, but all these times remains an aqueous mixture, until the extrusion step takes place, wherein the mixture is converted into dry extrudates. Aqueous mixture may also be referred to as "aqueous stream" or merely "stream". Throughout the process, the concentration of the aqueous mixture may be defined by their total solids content. This is given in wt%, based on the total weight of the stream. "Solids", "Total Solids" or "Total Solids Content" refers to all components of the aqueous stream with the exception of water, even these solids are in liquid state at ambient conditions, such as oils.

*Starting materials and heat treatment step (a)*

One step in the method of the invention is step (a) wherein an aqueous mixture having a protein component and a carbohydrate component is subjected to a heat treatment step.

The aqueous mixture having a protein and carbohydrate component is preferably composed of conventional and widely available starting materials or sources which may be selected from skim milk, whey protein concentrates (WPC), whey protein isolations (WPI), milk protein isolates (MPI), milk protein concentrates (MPC), demineralized whey protein powder, skimmed milk concentrates with any suitable protein level and preferably micronutrients. The starting materials comprising the protein component are preferably non-heat treated due to the inclusion of a heat treatment step in the process of the present invention providing a first flexibility in the choice of the protein-containing starter material. Typically, the protein sources used to provide the protein component are thus not of pure grade or high grade but contain lactose as this is present as an ingredient in these milk protein sources. Thus, in a preferred embodiment, the starting materials used in step (a) do not include a lactose source that does not contain substantial amounts of milk proteins. In other words, the starting materials of step (a) do not include lactose with a purity of more than 92 wt%, preferably more than 90 wt%, more preferably more than 85 wt%, based on dry weight since such lactose sources, such as refined lactose is of high food grade and are preferably added as such in the process of the invention during the extrusion step (d). If desirable to add, also maltodextrin is most preferably not added in step (a) but downstream, such as during extrusion step (d) or a dry blending step following extrusion to allow the proteins levels on the dry weight basis to be as high as possible during the heat treatment.

In a preferred embodiment, the carbohydrate component added in step (a) comprises or consists of digestible carbohydrates that are naturally occurring in bovine milk, preferably monosaccharides and/or disaccharides. More preferably, the carbohydrate component comprises lactose as this is a highly preferred component of infant formulae and naturally occurring in bovine milk.

In a preferred embodiment, the amount of lactose contained in the carbohydrate component of step (a) constitutes between 15 and 75 wt% of the total lactose contents of the infant formula product produced by the present method, on dry weight basis. More preferably, this amount of lactose in step (a) lies between 20 to 70 wt% or 22 to 65 wt% of the total lactose contents of the infant formula product produced by the present method, on dry weight basis. Any remaining lactose to be included in the infant formula product is preferably added in step (d) and/or (e), most preferably at least 20, 40 or 50 wt% of the remaining lactose to be added is added via step (d).

In a preferred embodiment, the weight ratio of protein to carbohydrate of the aqueous mixture lies in the range of 1.0 to 0.01, more preferably in the range of 0.5 to 0.05, most preferably in the range of 0.2 to 0.1. The weight ratio of protein to carbohydrate of the aqueous mixture is based on the aim to manufacture an infant formula and takes into account that lactose can be added further downstream of the process, i.e. during the extrusion step (d) and/or to the extruded material in step (e).

Typically, a whey protein source, preferably skim milk, WPC and/or WPI, and a casein source, preferably a milk protein source, more preferably MPI and/or MPC, are blended to obtain a protein mixture. The ratio at which the whey protein source and the milk protein source are blended depends on the desired product to be manufactured, and typically is in the range of whey protein to casein of 9/1 to 1/9, preferably 5/1 to 1/5, more preferably 3/1 to 1/1, most preferably about 6/4. Alternatively, the ratio at which the whey protein source and the milk protein source are mixed is in the range of 1/9 - 1/9, more preferably in the range 1/2 - 2/1, most preferably about 1/1, based on weight of the protein fraction in each of the sources.

In a preferred embodiment, the amount of proteins included in step (a) constitutes between of 70 and 100 wt% of total protein that is present in the infant formula obtained by the present invention, on a dry weight basis. Preferably, said protein amount lies between 80 and 100 wt%, more preferably between 90 or 95 and 100 wt%. Adding such high amounts of protein already during step a) ensures even and good emulsification of proteins and oils in the oil-in-water emulsion further downstream the process and entrapment of oils by proteins.

Typically, water-soluble micronutrients as typical in the art of infant formula manufacture, like vitamins and minerals, are added to the aqueous mixture of step (a). Although one or more of the ingredients could be in dry form, it is preferred that they are in liquid form, preferably concentrated, form. As such, limited unnecessary water removal has to be performed as a consequence of the inclusion of these vitamins and minerals as a concentrate or dry powder. Including these micronutrients already in step a) has the advantage that they become fully integrated in the powder particles that constitute the product as obtained.

The starting materials are preferably used in liquid form or dissolved in a batch-wise manner to provide the aqueous mixture to control uniformity and concentration of ingredients of the produced products.

In step (a), the aqueous mixture having a protein component and a carbohydrate component is subjected to a heat treatment step. Preferably, the aqueous mixture is fully dissolved and of a uniform concentration before being subjected to the heat treatment. Preferably, the aqueous mixture is obtained by batch-wise dissolution in case the starting materials, such as skim milk and/or whey protein concentrate, are sourced for infant formula production in dry form. The process according to the invention is perfectly suitable for large scale manufacture. Thus, in one embodiment, the aqueous mixture is fed to the heat treatment of step (a) at a flow rate in the range of 500 - 25000 kg/h, preferably in the range of 1000 - 10000 kg/h, most preferably in the range of 2500 - 6000 kg/h.

The aqueous mixture comprising the protein component and the carbohydrate component is subjected to a heat treatment in step (a) that is designed obtain a microbial safe protein component and infant formula product with good shelf-life. Any suitable type of heat treatment known in the art may be employed, e.g. pasteurization or sterilization, such as HTST, ESL, UHT, dry heat or moist heat sterilization. The heat treatment as meant herein has the purpose of reducing the microbial load to such an extent that the resulting infant formula product is free from microorganisms and safe for consumption by infants. In particular, it is safe with regards to *Bacillus cereus* and *Enterobacter sakazakii,* for instance, such as laid down in European Regulation No 2073/2005 dated 2007, corrigendum No. 1441/2007.

Advantageously, as opposed to dry mixing based processes wherein no heat treatment on aqueous streams is needed, the aqueous mixture comprising the protein component is heat-treated as an integral part of the process of the present invention. Hence, the incoming protein component can thus be of a more variable grade or quality. One advantage of performing this integrated heat treatment step on an industrial scale is that it becomes possible to better control and steer towards microbial safety and to prevent recontamination from sourced protein components to occur. It is noted that spray-drying is usually, and herein, not considered to be a microbiocidal step.

The heat treatment is preferably performed on an aqueous mixture having a total solids content of 15 - 40 wt%, preferably 20 - 35 wt%, more preferably 18 - 32 wt%, most preferably about 25 - 32 wt%. At such concentration, the heat treatment is most optimally performed because of optimal further handling of the aqueous mixture during and after the heat treatment step, but also in the mixing tank used to obtain the aqueous mixture before it can be heat treated. The total solids content of the mixture in step (a) is the consequence of finding a balance between prevention of fouling of equipment, like mixing tanks, conduits etc., at too high total solids content and preventing unnecessary removal of excess water at steps downstream of the heat treatment.

The aqueous mixture in step (a) is subjected to the heat treatment prior to mixing it with the lipid component in step (b) to allow working at the most optimal high total solid levels and protein levels implying operating under conditions of elevated viscosities. Furthermore, exclusion of the lipid component from the heat treatment in step (a) means less energy is consumed by the process of the present invention.

Preferably, a lipid component is not actively added as a pure, single ingredient in step (a). It may be present in low amounts in the aqueous mixture subjected to step (a) since lipids may be present in the sources used for the protein component and the carbohydrate component. The process is fully operable when lipids are present from step (a) onwards.

*Optional concentration step of the heat treated aqueous mixture*

After heat treatment but preferably prior to addition of the lipid component, the aqueous mixture may be concentrated. Concentration may be accomplished by any means known in the art, such as (partial) evaporation or filtration. In one embodiment, the aqueous mixture obtained in step (a) is subjected to partial evaporation of water, preferably at reduced pressure and relatively low temperature. Preferably, the concentration is performed such that the concentrated aqueous mixture, prior to addition of the lipid blend, is the range of 35 - 60 wt% total solids, preferably 35 - 55 wt% total solids, more preferably 40 - 55 wt% total solids, more preferably 40 - 51 wt% total solids, most preferably 45 - 51 wt% total solids. The inventors found that such concentration gives, after addition of lipids, an optimal concentration prior to execution of the homogenisation and extrusion steps. If concentration occurs after addition of the lipid blend, the final concentration may be somewhat higher to still feed the extruder with a composition having a solids content of 45 - 73 wt% total solids, preferably 53 - 68 wt% total solids, most preferably 60 - 65 wt% total solids.

Thus, in a preferred embodiment, the total solids content of the aqueous mixture obtained in step (a) is increased, preferably by an evaporation step, prior to mixing with the lipid component. In one embodiment, the amount of water removed in the concentration step, preferably to in the evaporator, is in the range of 200 - 10000 kg/h, preferably in the range of 800 - 5000 kg/h, most preferably in the range of 1500 - 2500 kg/h.

*Mixing-in of the fat component in step (b)*

In mixing step (b), the aqueous mixture obtained in step (a) is mixed with a lipid component. The mixing can take place in any suitable way, preferably comprising an in-line injection system. In one embodiment, the aqueous mixture is fed to step (b) at a flow rate in the range of 300 - 20000 kg/h, preferably in the range of 800 - 10000 kg/h, most preferably in the range of 1500 - 5000 kg/h. The lipid component to be added during step (b) is preferably fed to step (b) at a similar flow rate, thus in the range of 300 - 20000 kg/h, preferably in the range of 800 - 10000 kg/h, most preferably in the range of 1500 - 5000 kg/h. Although the temperature at which step (b) is performed is not crucial in the context of the present invention, it is preferred that the temperature of step (b) is in the range of 30 - 75 °C, more preferably in the range of 50 - 70 °C, most preferably in the range of 55 - 65 °C.

A lipid component is added prior to homogenisation and emulsification. This lipid component typically contains the essential and preferred lipids for infant formula manufacture, as known in the art. Preferably, it also contains the lipid-soluble vitamins. Although the lipid component may be added at any point prior to homogenisation, it is added after the heat treatment step. This is because addition of the lipid component raises the total solid content of the mixture which is not desirable prior to the heat treatment step. This way, most of the space in terms of solids content which is available in the mixture that is heat-treated in step (a) is taken up by the protein component thus avoiding unnecessary inclusion of the lipid component at that stage of the process.

Mixing of the lipid component in step (b) causes an increase in the total solids content of between 5 and 25 wt%, preferably 9 to 20 wt%, more preferably 12 to 18 wt%.

After mixing of the lipid component in step (b), a composition having a total solids content in the range of 45 - 73 wt% is obtained. Preferably, said composition has a total solids content in the range of 53 - 73 wt% total solids, such as 60 - 73 wt%, more preferably in the range of 53 - 68 wt%, preferably in the range of 60 - 65 wt% after mixing in the lipid component.

Preferably, fat-soluble vitamins are included in the lipid component as it is mixed in step (b).

*Step (c) homogenization and emulsification to obtain an oil-in-water emulsion*

In step (c), the aqueous mixture comprising the lipid component, the carbohydrate component and the heat-treated protein component is subjected to homogenization and emulsification to obtain a homogenized oil-in-water emulsion having a total solids content in the range of 45 - 73 wt% total solids, more preferably in the range of 53 - 73 wt%, such as 60 - 73 wt%, more preferably in the range of 53 - 68 wt% total solids, most preferably in the range of 60 - 65 wt% total solids. Such concentrations are especially desirable for the following extrusion step, wherein the solids content should not exceed the indicated upper limit due to constraints of equipment used to handle the oil-in-water emulsion and not fall below the lower limit because too much water will have to be removed downstream. In one embodiment, the aqueous mixture is fed to step (c) at a flow rate in the range of 800 - 40000 kg/h, preferably in the range of 2000 - 20000 kg/h, most preferably in the range of 3000 - 7500 kg/h.

The aqueous mixture subjected to step (c) preferably contains substantially all lipids of the final product. The aqueous mixture typically contains carbohydrates, such as lactose originating from the whey protein source and/or the milk protein source, but the inventors have found that additionally required lactose may be added during extrusion in step (d).

The incoming aqueous mixture contains both casein and whey protein, preferably in the ratio desired for the final product, which is preferably in the range of whey protein to casein of 9/1 to 1/9, preferably 5/1 to 1/5, more preferably 3/1 to 1/1, most preferably about 6/4. Having both whey protein and casein present prior to homogenisation was found to be advantageous, as the proteins are as such homogeneously distributed in the emulsion after homogenisation already, preferably prior to extrusion, and eventually in the obtained infant formula product.

One advantage of obtaining a homogeneous oil-in-water emulsion before extrusion is started, is that a uniform distribution of nutrients is obtained throughout the composition which is easier to achieve than by relying on an extrusion step for the homogenisation and emulsification. Also, this order of steps ensures that the emulsion thus obtained contains lipids that are protected by a protein layer. Such protection is important since dry infant products need to be consistent in composition and stable for a long time. Importantly, the presence of free fat (or non-encapsulated fat) is reduced to a minimum before extrusion takes place and which is not altered during extrusion. Thus, already at an upstream, early phase of the process, the ingredients of the infant formula are safeguarded from becoming rancid and oxidation following unnecessary exposure to air.

Homogenisation of aqueous mixtures containing a protein component, a lipid component and a carbohydrate component is known in the art, and the exact conditions at which homogenisation is performed are also known with the skilled person.

Preferably, homogenisation is performed at a temperature between 50 and 80 °C, preferably between 54 and 76 °C, more preferably between 60 and 70 °C and preferably within 5 seconds, more preferably less than 3 seconds. The indicated ranges ensure minimised protein modifications and degradation of heat labile components, but sufficiently high to still be able to properly perform step (c) on a product with good viscosity.

In a preferred embodiment, the total solids content obtained during steps (a) and (b) are 15 - 40 wt%, preferably 20 - 35 wt%, most preferably about 25 - 32 wt% after step (a) and 45 - 80 wt%, preferably 45 - 73 wt% total solids, more preferably 53 - 68 wt%, or more preferably 60 - 65 wt% after step (b) wherein the total solids increase in step (b) is due to addition of lipids and optionally by the inclusion of a concentration step prior to lipid addition. Importantly, the extruder is fed with a homogenized oil-in-water emulsion having a total solids content in the range of 45 - 80 wt%.

In one embodiment, the oil-in-water emulsion has a viscosity in the range of 10 to 2000 mPa.s, preferably 10 to 1500 mPa.s, more preferably In the range of 50 of 1200 mPa.s, more preferably In the range of 100 to 1000 mPa.s, most preferably In the range of 200 and 700 mPa.s.

The viscosity as meant herein is measured at 70°C with a shear rate of 1/1000s since this temperature is representative for the conditions in the extruder allowing one to mimic these conditions on a laboratory scale to quickly assess the behaviour of a particular infant formula under investigation.

The viscosity can be measured using any suitable apparatus. For avoidance of doubt, herein the viscosity is measured using an Anton Paar© Physica MCR301 with cone plate probe (cone angle 1°), probe number CP50 1 4310, for measurements at the indicated conditions. Briefly, the viscosity measurement follows a first stepped flow wherein the shear rate is increased from 1 $s^{-1}$ to 1000 $s^{-1}$ after which the viscosity is measured in a peak hold step for five times at shear rate 1000 $s^{-1}$ at 70 °C and the average value is taken using the indicated apparatus.

*Step (d) extrusion of the oil-in-water emulsion*

The homogenized oil-in-water emulsion is conveyed or transported into an extruder and independently of the emulsion, the digestible carbohydrates (e.g. lactose) and optionally dietary fibres are added to the extruder, and the contents of the extruder are extruded to obtain an extruded material.

Independent addition of digestible carbohydrates is herein defined as addition in the extruder via an inlet that is not used to feed the oil-in-water emulsion in the extruder. Independent addition of dietary fibres herein is defined as addition in the extruder via an inlet that is not used to feed the oil-in-water emulsion in the extruder. Even though digestible carbohydrates and carbohydrates may be added together via a single inlet to the extruder, they are preferably added via separate inlets.

Extrusion is well-known in the art, and any means known to the skilled person can be used. Extrusion is performed at a temperature below 75 °C, preferably below 70 °C, more preferably 50 - 75 °C, such as 60 - 70 °C, most preferably 62 - 68 °C. Above these temperatures, proteins may become unnecessarily modified which is undesirable for infant formula. The inventors found that the indicated temperature range does not hamper the properties of the final product.

Typically the oil-in-water emulsion is entered into the extruder at one side of the extruder. Inside the extruder, it is forced forward by movement of a screw. The residence time inside the extruder is preferably between 30 seconds and 3 minutes, such as between 50 seconds and 2 minutes. Preferably though, the time is shortened compared to existing extrusion steps used in infant formula recipe production since the incoming stream is more homogenized and more complete in terms of the required final nutrient composition. Therefore, the more preferred residence time lies below 50 seconds, such as between 20 and 50 seconds. In one embodiment, the extruder operates at a flow rate in the range of 2000 - 60000 kg/h, preferably in the range of 5000 - 30000 kg/h, most preferably in the range of 7500 - 15000 kg/h.

The pressure exerted on the composition during extrusion preferably lies between 20 kPa and 10 MPa.

The oil-in-water emulsion that is fed in the extruder has a total solids content in the range of 45 - 73 wt% total solids, preferably in the range of 53 - 73 wt%, more preferably in the range of 60 - 73 wt%, such as 53 - 68 wt% total solids, most preferably 60 - 65 wt% total solids. The inventors have found that this concentration provides optimal results, both in terms of the final product characteristics as well in process efficacy. Notably, the amount of water that needs to be added to the aqueous mixture prior to the extrusion step is kept at a minimum, and yet the extrusion is performed optimally.

The inventors found that some solid material that is typically incorporated in the nutritional composition according to the invention can advantageously be added during extrusion. During infant formula manufacture, ingredients such as lactose and dietary fibres are typically added in solid form. Moreover, it is not crucial that all of the lactose and dietary fibres are present during homogenisation step (c) from a manufacturing point of view to obtain the final infant formula product. Hence, lactose and optionally also dietary fibres are added during extrusion.

In one embodiment, the amount of lactose that is added during step (d) lies between 0 and 70 wt%, preferably between 2 and 70 wt% (on dry weight basis), of the total amount of lactose contained in the infant formula obtained in step (e). Preferably, this amount lies between 0 and 50 wt% or between 25 and 50 wt%.

In an alternative embodiment, the amount of lactose that is added during step (d) lies between 0 and 40 wt%, preferably between 2 and 40 wt%, of the total dry weight of the infant formula obtained in step (e). More preferably, this amount lies between 0 and 30 wt%, most preferably between 2 and 30 wt%.

The digestible carbohydrates added in step (d) preferably comprise or consist of lactose and/or maltodextrin.

In a preferred embodiment, the digestible carbohydrates, such as lactose and/or maltodextrin that is fed into the extruder, are of (infant) food grade quality and have a purity of more than 90 wt%, preferably more than 95%. Purity herein refers to the presence of the intended ingredient in terms of dry weight, so expressly excluding water as in impurity. Because lactose and/or maltodextrin are added in dry form, significant amounts of water are prevented from entering the manufacturing process and are thus not required to be removed again afterwards. Managing the liquid streams thus becomes more efficient. Adding these ingredients during extrusion reduces the need for water addition and allows higher total protein solids to be present upstream the extrusion step.

The point of addition in the extruder of lactose and/or maltodextrin is preferably before the dietary fibres are added to aid dissolution of the digestible carbohydrates. Dietary fibres, like galactooligosaccharides, can be added at a later stage during extrusion since these fibres can be added as a concentrated liquid.

In one embodiment, some of the protein required for manufacturing an infant formula is added during extrusion. The process of the present invention allows for such flexibility to be present since all the lipids are already fully emulsified with the proteins in step (c). Preferably, between 0 and 30 wt% of the total protein component of the infant formula product is added during step (d), more preferably 0 to 20 or most preferably 0 to 10 wt% of total protein.

In a preferred embodiment, dry lactose powder and/or dry maltodextrin powder is added during extrusion.

In a preferred embodiment, the dietary fibres are added as a concentrated liquid or syrup, such as galactooligosaccharides.

In a preferred embodiment, the amount of digestible carbohydrates added, mainly lactose and/or maltodextrin and optionally the dietary fibres, is such that the total solids content of the material exiting the extruder lies in the range of 75 - 90 wt%, preferably 75 - 88 wt%, more preferably 80 - 88 wt%, most preferably 83 - 87 wt%.

During extrusion, a gas is injected into the extruder. The gas injection occurs downstream of the two inlets for addition of the emulsion, the carbohydrates and optionally the dietary fibres and any other material that may be added to the extruder. During the extrusion step (d), the oil-in-water emulsion is mixed with a gas in order to obtain a homogeneous aerated structure. The injection of gas during a step when the emulsion is stirred ultimately leads to an extrudate having an aerated structure. In the context of the present invention, "aerated" refers to solid or liquid matrix containing vacuoles wherein a gas is entrapped. This injection of gas is advantageous to obtain the functional and usage properties of the powdered milk such as density, porosity, wettability and complete and instantaneous rehydratability. In addition, the aerated structure of the extrudate facilitates subsequent drying thereof by substantially increasing the exchange surface area between the emulsion that is being extruded and the ambient medium, and by thus facilitating the transfer of steam. Additionally, the aerated extrudate has a lower viscosity and a better flowability than nonaerated extrudates, which facilitates further handling such as drying. The inventors found that aeration increases the flowability of the extrudate, and prevents a pasta-like structure which would be impossible to feed to a spray-drier. Such a paste-like extrudate should be converted into a powder, as part of step (e), by air-drying a thin layer of the extrudate (hardening) and milling the dried material. Such drying step provides a powder with inferior reconstitution and dissolution characteristics then a spray-dried powder. Contrarily, the aeration of the present invention ensures sufficient flowability and sufficiently low viscosity, that the extrudate can be fed to a spray-drier for converting the extrudate into a powder. Also, aeration of the powder was found to reduce the foaming after reconstitution of the powder. Foaming is undesirable in the context of infant formula products, as the foam largely sticks to the bottle and thus remains in the bottle upon feeding, potentially leaving important nutrients in the bottle. Thus, less foam directly after reconstitution is preferred from a user experience viewpoint. Also, a faster disappearance of the foam is preferred, such that more nutrients will be taken up by the liquid before the end of the feeding event. As shown in the examples, the infant formula products according to the present invention generate less foam upon reconstitution compared to conventional infant formula products.

Such aeration during extrusion can be performed in an extruder-aerator as known in the art, e.g. an intermeshing twin screw extruder-aerator. Any suitable gas can be used to be injected in the extruder, preferably inert gases such as nitrogen ($N_2$) or carbon dioxide ($CO_2$), are used, most preferably $N_2$ is used. The use of $N_2$ gave especially advantageous dissolution characteristics. Preferably, 0.3 - 4.0 L, more preferably 0.5 - 2.0 L, most preferably 0.8 - 1.0 L of the gas (at ambient conditions) is injected per kg total weight of emulsion that is being extruded, wherein the total weight refers to the total weight of the emulsion, the digestible carbohydrates and any other material that may be added separately to the extruder upstream of the gas injection.

The skilled person finds further guidance on how to implement the gas injection in US 8268378 or in Bouvier et al. Dairy Sci & Technol. 2013, 93, 387-399, which are incorporated by reference herein.

The extruded material may also be referred to as the extruded aerated material or simply the extrudate. The extrudate has a porous structure and typically is in the form of a foam. The extrudate contains pores or voids in various sizes, with the gas that is injected into the extruder being trapped within those voids. The extruded material contains substantially all proteins and/or lipids that are nutritionally required for an infant formula. In other words, no lipids and/or proteins need to be added to the extruded material. Dry blending with a further protein component, such as skimmed milk and the like, is thus not necessary thereby avoiding that the final product would have an undesirable broad or uneven particle size distribution caused by adding a product like skim milk. This way, a desirable uniform particle density distribution is obtained. Also, adding a milk protein source, or bovine milk protein source, at such a downstream part of the process disturbs the mineral composition due to the presence of minerals in such natural products.

In the context of the present invention, dietary fibres are synonymous to non-digestible oligo- and polysaccharides, most preferably galactooligosaccharides, fructooligosaccharides, fructopolysaccharides and mixtures thereof.

*Step (e) preparation of an infant formula from extruded material*

The extrusion step affords an extruded material which comprises substantially all of the solids that have been added to the extruder, including the solids of the oil-in-water emulsion and any solids that are additionally added during extrusion. The extruded material may also be referred to as extruded mixture or extrudate and typically is in the form of small grains.

The extruded material is already nutritionally complete as it exits the extruder and qualifies nutritionally as an infant formula. In such cases, the preparing of step (e) comprises typical steps as drying, milling and/or packaging such that the extruded material is prepared to be sold as an infant formula product. Further nutritional adaptation is not required in such instance and not included in step (e).

Alternatively, preparing in step (e) further comprises some nutritional supplementation of the extruded material to arrive at a nutritionally complete infant formula product. Preferably, the nutritional supplementation comprises dry-blending of the missing nutrients or the missing amounts of nutrients. Alternatively, any required supplementation is done at an earlier stage of the process, e.g. prior to step (a), during the mixing of step (b) and/or during the extrusion of step (d), such that no further supplementation is required during step (e).

In one embodiment, this supplementation comprises addition of lactose and/or minerals and/or vitamins as possibly required to afford the nutritionally-complete formula.

In a preferred embodiment, digestible carbohydrates (preferably lactose, but also maltodextrin may be meant) and/or micronutrients are added to the extruded material to afford an infant formula. Adding lactose and/or maltodextrin to the infant formula product to afford the infant formula can advantageously be done using sources with sufficiently overlapping particle size distribution or a distribution that falls within the distribution of the extruded material, thereby not causing an unbalanced distribution which could negatively impact the powder particle properties and behaviour, such as flowability, which could be caused by adding a milk protein source at this stage of the process. The particle size distribution of commercially available lactose or maltodextrin is readily controlled by suppliers upon request and can easily be determined by the skilled person. The amount of lactose and/or maltodextrin added to the extruded material comprises between 0 and 40 wt% on dry weight basis of the final infant formula obtained, preferably between 0 and 30 wt%. Alternatively, the amount of lactose added to the extruded material comprises between 0 and 70 wt% based on total amount of lactose in the final infant formula obtained, more preferably between 0 and 50 wt%. For maltodextrin, the more preferred amount added to the extruded material comprises between 1 and 20 wt%, based on dry weight of the final infant formula obtained, preferably between 1 and 15 wt%.

The extruded material typically has a total solid content in the range of 75 - 90 wt%, preferably 75 - 88 wt%, more preferably 80 - 88 wt%, most preferably 83 - 87 wt%.

In a preferred embodiment, the extruded material is subjected to a drying step to further reduce the moisture content as part of step (e). Such drying may be performed by any means known in the art, such as flash drying, vacuum drying, belt drying, microwave drying, IR drying and spray-drying. Such a drying step may operate at a flow rate of 2000 - 40000 kg/h, preferably 4000 - 20000 kg/h, most preferably 6000 - 12000 kg/h. The final moisture content after drying is preferably in the range of 0.5 - 5 wt%, preferably, 1 - 4 wt%, more preferably 2 - 3.5 wt%, most preferably 2.5 - 3 wt%, based on total weight of the product. Such low moisture content provides the infant formula product with a longer shelf-life, such as at least 12 months.

In a preferred embodiment, step (e) involves a spray-drying step. Spray-drying was found to further improve the porosity of the powder particles, and thus its solubility. Spray-drying can be performed by any means known in the art. Typically, the spray-drier operates with an inlet temperature in the range of 170 - 220 °C and an outlet temperature in the range of 40 - 90°C. In a preferred embodiment, the outlet temperature is in the range of 45 - 85 °C. Residence time with the spray-drier could be as low as 10 - 20 s, since the porous structure of the extrudate allows faster moisture transfer and thus faster drying. Also, the outlet temperature could be reduced compared to conventional spray-driers which typically operate at 55 - 95 °C.

During spray-drying, the gas that is trapped within the vacuoles of the extrudate is expanded, which leads to the formation of hollow particles. Since there are many small vacuoles present in the extrudate, highly porous particles are formed during spray-drying.

Other types of drying as indicated above are also possible. The porosity of the resulting product will still be increased by virtue of the gas injection during step (d), but the additional increase in porosity achieved by the spray-drier is not achieved. Nonetheless, such products are suitable as infant formula products.

In a preferred embodiment, the extruded material, preferably the dried extruded material, is milled as part of step (e). Preferably, milling is performed such that a free-flowing powder is obtained. Milling is particularly preferred in case the drying step is not performed by spray-drying, but e.g. using a belt dryer or flash dryer. When spray-drying is used, the milling step can advantageously be omitted.

Thus, the invention also pertains to an infant formula product, obtainable by the process according to the invention as defined in claim 1, wherein the extrusion step (d) is performed at a temperature below 75 °C. It is preferably nutritionally complete when it exits the extruder. Preferably, the infant formula product is an infant formula, a follow-on formula, a toddler milk or a growing-up milk.

The nutritionally complete formula, or the infant formula product, is a dry powder that only requires reconstitution in the prescribed amount of water to achieve a ready-to-feed product suitable for being fed using a baby bottle.

The infant formula product according to the invention is in powdered form and is intended to be reconstituted with a liquid, typically water, in order to obtain an infant formula product that can be used to provide nutrition to infants. The powder is advantageously a free-flowing powder, such that it can easily be scooped and measured. The product according to the invention is readily dissolved in water at ambient temperature to prepare a ready-to-feed product for immediate consumption. The ready-to-feed products are stable for the time needed to be consumed by an infant, in particular they contain a stable emulsion. Furthermore, the presence of free fat is desirably low, typically below 2 wt% or even below 1.5 wt% or below 1 wt%, based on the total lipid content. As free fat is prone to oxidation during storage, its content is preferably as low as possible. Notably, the free fat content observed after the homogenisation step remains desirably low after the extrusion and further steps of the process according to the invention. These low free fat contents are determined on the final product.

Preferably, the product obtained by the present process is an infant formula. An infant formula herein is defined as a nutritionally complete formula, and includes infant formula (meant for infants of 0 to 6 months), a follow-on formula (meant for infants of 6 to 12 months), and a toddler milk or growing-up milk (meant for toddlers or young children of 1 to 3 years old).

The infant formulae according to the invention comprise or preferably consist of the essential macronutrients and micronutrients as set by law. Such requirements are typically laid down in regulatory bodies, such as EU directive 91/321/EEC and 2006/141/EC or US Food and Drug Administration 21 CFR Ch 1 part 107.

The infant formula products directly obtained or obtainable by the process according to the invention or the infant formulae obtained or obtainable by the process according to the invention is also part of the present invention. The infant formula products according to the invention are typically characterized by an increased porosity compared to prior art milk-based powders. Typically, the porosity is in the range of 30 - 75 %, preferably in the range of 45 - 70 %, most preferably in the range of 55 - 65 %. Conventional spray-dried milk-based powders may have a porosity as low as 20 - 25 %. Herein, the porosity is defined as the percentage of the volume of the voids over the total volume of the powder. Porosity may be determined by scanning electron microscopy, for example as defined in US 5596815.

In view of the increased porosity compared to prior art milk powders, the infant formula products according to the invention exhibit excellent solubility. Additionally or alternatively, the infant formula products according to the invention can be defined by a bulk density in the range of 150 - 650 kg/m$^3$, preferably in the range of 200 - 400 kg/m$^3$, more preferably in the range of 250 - 350 kg/m$^3$.

The process according to the invention thus affords extruded infant formula products with improved solubility compared to conventional extruded infant formulae as well as conventional spray-dried formulae. The advantages associated with the process of the invention are thus combined with the production of a product with excellent characteristics.

*Modular system for carrying out the manufacturing process of the invention*

A further aspect of the disclosure relates to a modular system for carrying out the method steps according to the appended claims for manufacturing an infant formula.

In this further aspect, the disclosure relates to a modular system for manufacturing an infant formula comprising:

- a heat-treatment module for heat-treating an aqueous mixture having a protein component and a carbohydrate component,
- a mixing module for mixing the aqueous mixture with a lipid component,
- a homogenization and emulsification module for subjecting the aqueous mixture comprising the lipid component, the carbohydrate component and the heat-treated protein component to homogenization and emulsification to obtain a homogenized oil-in-water emulsion,
- an extrusion module comprising an inlet for receiving the homogenized oil-in-water emulsion, a separate inlet for adding digestible carbohydrates and optionally dietary fibres into the extrusion module and an outlet for exiting of the extruded material and a gas injection inlet,
- a drying module for drying the extruded material,
- and optional modules for milling and/or packaging the obtained material.

In a preferred embodiment, the aqueous mixture comprising the protein component and the carbohydrate component is subjected to a heat treatment step using a module that is designed to obtain a microbial safe protein component and infant formula product with good shelf-life. Any suitable type of heat treatment module known in the art may be employed, e.g. pasteurization, such as HTST, ESL or UHT, or sterilization, for example dry heat or moist heat sterilization.

In a preferred embodiment, the modular system comprises a module for concentrating the aqueous mixture obtained after step (a). Such concentration may be accomplished by any means known in the art, such as using (partial) evaporation or filtration module. In one embodiment, the aqueous mixture obtained in step (a) is subjected to partial evaporation of water, preferably at reduced pressure and relatively low temperature using a suitable module. Preferably, the concentration module is equipped or suited to concentrate the aqueous mixture, prior to addition of the lipid blend, to arrive at a concentration in the range of 35 - 60 wt% total solids, preferably 40 - 55 wt% total solids, most preferably 45 - 51 wt% total solids.

Thus, in a preferred embodiment, the total solids content of the aqueous mixture obtained in step (a) is increased, preferably using an evaporation module, which is included prior to the mixing module for mixing in the lipid component.

The modular system comprises a mixing module for carrying out mixing step (b) wherein the aqueous mixture obtained in step (a) is mixed with a lipid component. The mixing can take place in any suitable way, preferably a module comprising an in-line injection system. Preferably, the mixing module comprises means for heating the aqueous mixture obtained in step (a), the lipid component, or the mixture thereof, preferably at a temperature in the range of 30 - 75 °C, more preferably in the range of 50 - 70 °C, most preferably in the range of 55 - 65 °C.

The mixing module for mixing in the lipid component is included prior to the homogenisation and emulsification module. Although the lipid component may be added at any point prior to homogenisation, it is included after or downstream of the heat treatment module.

The modular system of the disclosure includes a homogenization and emulsification module for carrying out step (c). It is capable of obtaining a homogenized oil-in-water emulsion having a total solids content in the range of 45 - 73 wt% total solids, preferably 53 - 68 wt% total solids, most preferably 60 - 65 wt% total solids.

The homogenisation and emulsification module is configured to operate at a temperature between 50 and 80 °C, preferably between 54 and 76 °C, more preferably between 60 and 70 °C and to achieve a homogenized emulsion preferably within 5 seconds, more preferably less than 3 seconds. Furthermore, the homogenisation and emulsification module is preferably configured to operate with an oil-in-water emulsion having a viscosity in the range of 10 to 2000 mPa.s, preferably 10 to 1500 mPa.s, more preferably In the range of 50 of 1200 mPa.s, more preferably In the range of 100 to 1000 mPa.s, most preferably In the range of 200 and 700 mPa.s.

The homogenized oil-in-water emulsion is conveyed or transported into an extrusion module, which may also be referred to as an extruder. The module comprises an inlet for receiving the emulsion and independently thereof, an inlet for adding the digestible carbohydrates (e.g. lactose) and optionally an inlet for adding dietary fibres. The extrusion module further comprises a gas injection inlet for injection gas into the extruder.

Suitable extrusion modules or extruders are well-known in the art and known to the skilled person. The extruder is equipped to operate at an extrusion temperature below 75 °C, preferably below 70 °C, such as 50 - 75 °C, more preferably 60 - 70 °C, most preferably 62 - 68 °C.

Typically, the oil-in-water emulsion enters the extruder at one side of the extruder and exits is as an extruded material at the opposite side such that it has gone through the full path of the extruder. Inside the extruder, the material contained therein is forced forward by movement of a screw. The extruder is equipped to operate with residence times of preferably between 30 seconds and 3 minutes, such as between 50 seconds and 2 minutes. Preferably though, shortened residence times of below 50 seconds, such as between 20 and 50 seconds should also be possible.

The extruder is furthermore preferably equipped to exert a pressure on the composition during extrusion that lies between 20 kPa and 10 MPa.

The extruder is preferably equipped to operate with oil-in-water emulsions that have a total solids content in the range of 45 - 80 wt% total solids, preferably 45 - 73 wt% total solids, more preferably 53 - 68 wt% total solids, most preferably 60 - 65 wt% total solids.

Any drying module for drying the extruded material may be used. In a preferred embodiment, the drying module is a spray-drier.

In a preferred embodiment, the modular system further comprises a dry blending module for dry blending ingredients into the material obtained before the infant formula is packaged.

Such dry blending module is only required in case the extruded material does not qualify nutritionally as an infant formula according to the invention but needs supplementation with powdered ingredients such as digestible carbohydrates, preferably lactose and/or maltodextrin.

In the modular system according to the disclosure, the separate modules are in fluid connection to allow passage of the material (the aqueous mixture or the infant formula product in preparation) from one module to another, to enable smooth operation of the modular system as a whole. In one embodiment, the modular system is for preparing the infant formula product according to the invention. In one embodiment, the modular system is for performing the process according to the invention.

**Figures**

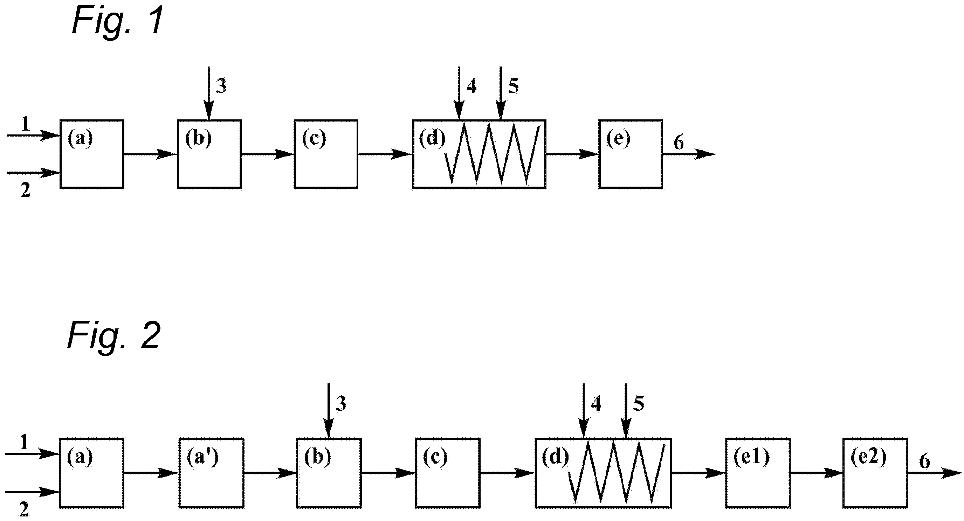

The invention is illustrated by figures 1 and 2, depicting preferred embodiments of the process according to the invention.

Figure 1 depicts a preferred embodiment of the process according to the invention, wherein (a), (b), (c), (d) and (e) represent steps (a), (b), (c), (d) and (e) as defined herein. (1) = introduction of a source of protein and digestible carbohydrate; (2) = optional introduction of a second source of protein and digestible carbohydrate; (3) = introduction of a lipid component (4) introduction of a digestible carbohydrate component; (5) = optional introduction of a dietary fibre component; (6) = discharge of the infant formula product. Gas injection into the extruder is not shown.

Figure 2 depicts a preferred embodiment of the process according to the invention, wherein (a), (b), (c) and (d) represent steps (a), (b), (c) and (d) as defined herein, (a') represents a step wherein the aqueous mixture is increased in total solid content as defined herein; (e1) represents a drying step as defined herein; and (e2) represents a milling step as defined herein. (1) = introduction of a source of protein and digestible carbohydrate; (2) = optional introduction of a second source of protein and digestible carbohydrate; (3) = introduction of a lipid component (4) introduction of a digestible carbohydrate component; (5) = optional introduction of a dietary fibre component; (6) = discharge of the infant formula product. Gas injection into the extruder is not shown.

**Examples**

The following examples illustrate the invention.

*Example 1*

A process flow was generated for production of an infant formula intended for infants with an age of between 0 and 6 months. In a first step, demineralized whey (Demin Whey, flowrate 3166 kg/h), liquid whey protein concentrate 80 (WPC80, flowrate 430 kg/h), water (flowrate 677.2 kg/h) and the required amounts of micronutrients (i.e. vitamins and minerals) were compounded into an aqueous liquid with a total solids content (%TS) of 25 at a temperature of 35°C, and processed at a flowrate of 4419 kg/h.

The aqueous liquid was subsequently heat treated at 121.0°C with a residence time of 2.89 seconds to achieve an $F_0$ of 2.4. After cooling, the heated solution is subsequently fed into an evaporator for concentration purposes during which water was removed at a flowrate of 1943.5 kg/h. After evaporation, the aqueous solution has a %TS of 44.6 and is conveyed with a flowrate of 2475.5 at a temperature of 60°C to the oil injector. Oils necessary to produce the infant formula are injected into the aqueous stream at a flowrate of 2337.32 kg/h to reach a %TS of 71.5. The solution is subsequently fed into a homogenizer for homogenization and emulsification at 60°C using a flowrate of 4812 kg/h. The homogenized oil-in-water emulsion is conveyed to the extruder.

During extrusion, whey protein concentrate (WPC35, flowrate 388.8 kg/h), whey protein concentrate powder (WPC80, flowrate 91.2 kg/h), skim milk powder (SMP, flowrate 1349.3 kg/h), lactose (1417.4 kg/h) and GOS (Vivinal GOS; concentrated liquid at 75wt%, flowrate 1685.9 kg/h) were added. GOS is added as the final ingredient during the extrusion process. Extrusion is performed at 63°C at a flowrate of 9745.6 kg/h. The extrudate as obtained contained 80 %TS and was ready for drying using known technologies, such as flash or vacuum belt drying, to end up with a nutritional composition with a %TS of 97.5 which was produced at a flowrate of 7996.4 kg/h. No dry blending of further ingredients is required. A powdered composition was obtained that was ready for packaging.

*Example 2*

A process flow was generated for production of an infant formula intended for infants with an age of between 6 and 12 months. In a first step, liquid whey protein concentrate 35 (WPC35, flowrate 1019.4 kg/h), water flowrate 3140.7 kg/h) and the required amounts of micronutrients (i.e. vitamins and minerals) were compounded into an aqueous liquid with a total solids content (%TS) of 25 at a temperature of 35 °C, and processed at a flowrate of 4236.5 kg/h. Protein content of the aqueous liquid was 8.44 wt%.

The aqueous liquid was subsequently heat treated at 121.0 °C with a residence time of 2.89 seconds to achieve an $F_0$ of 2.4. After cooling, the heated solution is subsequently fed into an evaporator for concentration purposes. After evaporation, during which water was removed with a flowrate of 1703.1 kg/h, the aqueous solution has a %TS of 41.8 and is conveyed with a flowrate of 2533.4 at a temperature of 60°C to the oil injector. Oils necessary to produce the infant formula are injected with a flowrate of 2029.82 kg/h into the aqueous stream to reach a %TS of 67.69. The solution is subsequently fed into a homogenizer for homogenization and emulsification at 60 °C using a flowrate of 4563.2 kg/h. The homogenized oil-in-water emulsion is conveyed to the extruder.

During extrusion, skim milk powder (SMP, flowrate 1633.45 kg/h), lactose (2472.24 kg/h) and GOS (Vivinal GOS; concentrated liquid at 75 wt%, flowrate 1084.8 kg/h) were added. GOS is added as the final ingredient during the extrusion process. Extrusion is performed at 65 °C at a flowrate of 9753.68 kg/h. The extrudate as obtained contained 80 %TS and was ready for drying using known technologies, such as flash or vacuum belt drying, to end up with a nutritional composition with a %TS of 97.5 which was produced at a flowrate of 8003.0 kg/h. No dry blending of further ingredients was required. A powdered composition was obtained that was ready for packaging.

*Example 3*

Data mentioned in example 1 and 2 were generated using the gPROMS gFormulatedProducts 1.2.2 simulation model from Process Systems Enterprise (PSE). Mass balance models used were steady state, meaning no accumulation in time is applied. Models were applied on a macro level without applying any discretization method.

For evaporation/concentration the mass balance of equation (1) was applied.

$$0 = \varphi_m^{in} - \varphi_m^{out} - \varphi_m^{evap} \qquad (1)$$

It states that the amount of evaporated water or water otherwise removed ($\frac{kg}{s}$) from a stream, plus the outlet from a stream should be equal to an inlet stream. From this perspective the outlet total solids $\left(\frac{kg}{kg}\right)$ were calculated via equation (2):

$$x_{solids}^{out} = \frac{x_{solids}^{in}\varphi_m^{in}}{\varphi_m^{out}} \qquad (2)$$

This was applied under the assumption that extracted water, extracted via evaporation or any other technology, is pure water.

The same approach was used for mixing of different streams either within compounding (i.e. preparation of an aqueous mixture prior to heat treatment step a), fat injection (i.e. step b) or extrusion (step d). Equation (3) applies for the total mass balance:

$$\varphi_m^{out} = \sum_{i=1}^{N_{streams}} \varphi_{m_i}^{in} \qquad (3)$$

The solids outlet of any mixer and/or extruder was calculated by adapting equation (3) in case multiple inlet streams were applied:

$$x_{solids}^{out} = \frac{\sum_{i=1}^{N_{streams}} x_{solids,i}^{in}\varphi_{m_i}^{in}}{\varphi_m^{out}} \qquad (4)$$

For the drying step, independent of the drying technology, equations 1 and 2 were applied to calculate the water evaporation capacity.

These equations were applied in a flowsheet construction. The information passed between models in a product flow are the mass flowrate and the composition (kg/kg).

*Example 4*

A process flow was generated for production of an infant formula intended for infants with an age of between 0 and 6 months. First, 40 kg of a mixture of demineralized whey and minerals (95% TS) was compounded into 35 kg water to obtain a solution having a total solids content of 51 % TS at a temperature of 29°C. The wet phase was subsequently fed into an oil injector and homogenizer. 39 kg of Oil necessary to produce the infant formula was injected into the aqueous stream to obtain 113 kg of an emulsion at 68% TS. The solution is subsequently homogenized at 60°C. The viscosity of the homogenized emulsion was determined to be 107 kcP (determined at 42 °C in a rotational viscometer).

The homogenized oil-in-water emulsion is conveyed to the extruder at a flow rate of 12.2 kg/h. During extrusion, GOS (Vivinal GOS; concentrated liquid at 75% TS, flowrate 3.3 kg/h), lactose (95% TS; 2.6 kg/h) and skim milk powder (SMP, 95% TS, 1.8 kg/h) were added. Extrusion is performed at 550 rpm and a temperature gradient of 55°C → 65 °C → $T_g$, using 30 L/h $N_2$ or 50 L/h $CO_2$ as aeration gas. The gas was injected at $T_g$, which was 60 °C for $N_2$ and 35 °C for $CO_2$. The viscosity of the $N_2$ aerated extrudate was determined to be 4.2 kcP (determined at 53 °C in a rotational viscometer), and of the $CO_2$ aerated extrudate was determined to be 8.4 kcP (determined at 46 °C in a rotational viscometer). The extrudate as obtained contained 75% TS and was spray-dried at 125 - 130 °C and 8 bar atomization air pressure, at a rate of 20 kg/h to end up with an infant formula base powder with 98% TS.

*Example 5*

The bulk volume and particle density of the infant formula base powder obtained in Example 4 and a control infant formula base powder not subjected to extrusion were measured. The bulk volume was determined following IDF guideline ISO8967, and the particle density using gas pycnometer UltraPyc1200E.

The bulk volume represents the amount in ml that 100 g of the powder takes up in volume, while the particle density provides an indication of the porosity of the powder. Both serve as an indication for the wettability of the powder. The table below shows that the poured and loose bulk volume of the aerated powders compared to the spray dried control powder are not strongly affected by the process according to the invention. Further, aeration with $N_2$ does not affect the particle size density of the powder, while powder aerated with $CO_2$ has a lower particle density and thus a higher porosity.

*Powder property analysis*

| | Average bulk volume (ml/100g) | | Average particle density (g/ml) |
|---|---|---|---|
| | Poured | loose | |
| $N_2$ gas injection | 216 | 158 | 1.25 |
| $CO_2$ gas injection | 285 | 215 | 0.88 |
| Control | 229 | 181 | 1.20 |

*Example 6*

The free fat content of the infant formula base powder obtained in Example 4 and a control infant formula base powder not subjected to extrusion were measured following guidelines in GEA Niro analytical methods Nr. A 10 b.

It is preferred that the amount of free fat is low as possible as free fat is prone to oxidation during storage. From the table below it can be observed that both powders aerated with either $N_2$ or $CO_2$ have free fat levels lower than 2% and thus meeting the preferred requirements of a stable infant formula powder.

*Free fat analysis*

| | Free fat (%) |
|---|---|
| $N_2$ gas injection | 1.5 |
| $CO_2$ gas injection | 1.9 |
| Control | 0.5 |

*Example 7*

The wettability and reconstitution characteristics of the infant formula powder obtained in Example 4 and a control infant formula not subjected to extrusion were measured following guidelines in GEA Niro analytical methods Nr. A 5 b and IDF guidelines.

The wettability refers to the time needed for the powder to sink through the water upon reconstitution, and represents an important feature for the user experience (cf. Example 9 below). Powder aerated with $CO_2$ gas had a wettability over 120 seconds, while powder aerated with $N_2$ has an improved wettability compared to the control. In addition, the reconstitution analysis showed that reconstitution behaviour was sufficient for all tested powder, with the aerated powders according to the invention performing slightly better than the control powder. Reconstitution values of 1 or lower correspond to excellent reconstitution properties. All in all, the powders obtained by the process according to the invention show desirable reconstitution behaviour without undesirable lumping or sticking.

*Wettability and reconstitution characteristics*

|  | Average wettability (s) | Average reconstitution |
|---|---|---|
| $N_2$ gas injection | 7 | 1 |
| $CO_2$ gas injection | >120 | 0.5 |
| Control | 12 | 1 |

*Example 8*

The infant formula powder obtained in Example 4 and a control infant formula not subjected to extrusion were further tested in a user experience evaluation. A dedicated milk panel of 8 members developed specific language for testing 16 attributes. In total 5 sessions for attributes generation and training were done, followed by 1 profiling session wherein the three products were blindly assessed for the 16 attributes.

In most attributes, the three tested formula did not perform significantly differently, however some noteworthy differences were observed in foaming behaviour and sinking speed. Foam formation after reconstitution of the powder is undesirable for the user, as the foam for a large extent remains in the bottle during a feeding event. Also, a faster collapse of the foam is preferred, as the user typically does not wait for the foam to collapse before starting to feed the infant. From the table below, it can be concluded that the aerated powders obtained according to the invention result in a reduced total amount of foam compared to the control formula. Also, it appears that the foam is less stable using the process according to the invention as the amount of foam quickly reduces over time. Both aerated formulae according to the invention outperformed the control formula, with a slight better performance for the $CO_2$ aerated one over the $N_2$ aerated one.

The sinking speed of the powderous infant formula is comparable to the wettability as described above. The sinking speed was measured as the speed with which the powder sinks through the water in the bottle after the sixth scoop is added. The lower the sinking speed, the faster the powder sinks in the fluid. The sinking speed of powder aerated with $CO_2$ gas is the highest, i.e. sinks the slowest, while powder aerated with $N_2$ gas sinks the fastest. These results are in accordance with the results obtained from the wettability experiment.

*User experience results*

|  | Foaming (%, 100 max, 0% min) | | | Sinking speed (100 high, 0 low) |
|---|---|---|---|---|
|  | After shaking | after 2 min | after 5 min |  |
| $N_2$ gas injection | 68 | 53 | 40 | 77 |
| $CO_2$ gas injection | 59 | 37 | 25 | 11 |
| Control (spray dry only) | 82 | 76 | 68 | 58 |

**Claims**

1.  Process for manufacturing an infant formula product comprising the following steps:

    (a) subjecting an aqueous mixture having a protein component and a carbohydrate component to a heat treatment step,
    (b) mixing the aqueous mixture with a lipid component,
    (c) subjecting the aqueous mixture comprising the lipid component, the carbohydrate component and the heat-treated protein component to a homogenization and emulsification step to obtain a homogenized oil-in-water emulsion having a total solids content in the range of 45 - 73 wt%;
    (d) conveying the homogenized emulsion into an extruder, independently adding digestible carbohydrates and optionally dietary fibres to the extruder and extruding the contents of the extruder wherein a gas is injected into the extruder, to obtain an extruded aerated material;
    (e) preparing an infant formula product from the extruded aerated material,

    wherein the extrusion of step (d) is performed at a temperature below 75 °C and wherein the extruded aerated material contains substantially all proteins and/or lipids that are nutritionally required for an infant formula.

2.  The process according to claim 1, wherein step (e) involves spray-drying of the extruded material.

3.  The process according to any of the preceding claims, wherein the protein component of the infant formula has a weight ratio of whey protein to casein in the range of 9/1 to 1/9, preferably in the range of 5/1 to 1/5, more preferably in the range of 3/1 to 1/1, most preferably about 6/4.

4.  The process according to any of the preceding claims, wherein the total solids content of the homogenized oil-in-water emulsion of step (c) is in the range of 53 - 68 wt%, preferably in the range of 60 - 65 wt%.

5.  The process according to any of the preceding claims, wherein the digestible carbohydrates, such as lactose and/or maltodextrin, are added in step (d) as a dry powder and the dietary fibres are added as a dry powder or as a concentrated liquid.

6.  The process according to any of the preceding claims, wherein the entire process, with the exception of the heat-treatment of step (a), does not exceed 75 °C.

7.  The process according to any of the preceding claims, wherein the heat treatment of step (a) is designed to obtain a microbial safe protein component and preferably is carried out by pasteurization, UHT, HTST or ESL, more preferably by pasteurization.

8.  The process according to any of the preceding claims, wherein the aqueous mixture of step (a) has a total solids content in the range of 15 - 40 wt%, preferably in the range of 20 - 35 wt%, most preferably in the range of 25 - 32 wt%.

9.  The process according to any of the preceding claims, wherein the aqueous mixture subjected to step (b) has a total solids content in the range of 35 - 60 wt%, preferably in the range of 40 - 55 wt%, most preferably in the range of 45 - 51 wt% prior to the mixing with the lipid component.

10. The process according to any of the preceding claims, wherein the total solids content of the aqueous mixture obtained in step (a) is increased, preferably by an evaporation step, prior to mixing with the lipid component.

11. The process according to any of the preceding claims, wherein skim milk and/or whey protein concentrate (WPC) are used as source of the protein component and carbohydrate component of the aqueous mixture subjected to step (a).

12. The process according to any of the preceding claims, wherein the carbohydrate component in step (a) comprises lactose, which lactose constitutes between 15 and 75 wt% of the total lactose contents of the infant formula product prepared in step (e), preferably wherein the remainder of the lactose is added during step (d) and/or step (e).

13. The process according to any of the preceding claims, wherein the digestible carbohydrate that is added during step (d) comprises lactose and the amount of lactose added during step (d) lies between 0 and 80 wt% (on dry weight basis) of the total amount of lactose contained in the infant formula product obtained in step (e), preferably between 25 and 50 wt%; and/or wherein the digestible carbohydrate that is added during step (d) comprises lactose and the amount of lactose that is added during step (d) lies between 0 and 40 wt% of the total dry weight of the infant formula product obtained in step (e), preferably between 0 and 30 wt%.

14. Infant formula product obtainable by the process according to any one of claims 1 - 13.

15. The infant formula product according to claim 14, which is an infant formula, a follow-on formula, a toddler milk or a growing-up milk; and/or wherein the extruded material is already nutritionally complete as it exits the extruder and qualifies nutritionally as an infant formula.


**Patentansprüche**

1. Verfahren zum Herstellen eines Säuglingsnahrungsprodukts, das die folgenden Schritte umfasst:

(a) Unterziehen einer wässrigen Mischung mit einer Proteinkomponente und einer Kohlenhydratkomponente einem Wärmebehandlungsschritt,
(b) Mischen der wässrigen Mischung mit einer Lipidkomponente,
(c) Unterziehen der wässrigen Mischung, die die Lipidkomponente, die Kohlenhydratkomponente und die wärmebehandelte Proteinkomponente umfasst, einem Homogenisierungs- und Emulgierschritt, um eine homogenisierte Öl-in-Wasser-Emulsion mit einem Gesamtfeststoffgehalt im Bereich von 45 - 73 Gew.-% zu erhalten;
(d) Fördern der homogenisierten Emulsion in einen Extruder, unabhängiges Hinzufügen von verdaulichen Kohlenhydraten und optional Ballaststoffen in den Extruder und Extrudieren des Inhalts des Extruders, wobei ein Gas in den Extruder injiziert wird, um ein extrudiertes belüftetes Material zu erhalten;
(e) Herstellen eines Säuglingsnahrungsprodukts aus dem extrudierten belüfteten Material,

wobei die Extrusion von Schritt (d) bei einer Temperatur unter 75 °C ausgeführt wird und wobei das extrudierte belüftete Material im Wesentlichen alle Proteine und/oder Lipide enthält, die ernährungsphysiologisch für eine Säuglingsnahrung erforderlich sind.

2. Verfahren nach Anspruch 1, wobei Schritt (e) das Sprühtrocknen des extrudierten Materials umfasst.

3. Verfahren nach einem der vorhergehenden Ansprüche, wobei die Proteinkomponente der Säuglingsnahrung ein Gewichtsverhältnis von Molkenprotein zu Casein im Bereich von 9/1 bis 1/9, vorzugsweise im Bereich von 5/1 bis 1/5, besonders bevorzugt im Bereich von 3/1 bis 1/1, am bevorzugtesten etwa 6/4 aufweist.

4. Verfahren nach einem der vorhergehenden Ansprüche, wobei der Gesamtfeststoffgehalt der homogenisierten Öl-in-Wasser-Emulsion von Schritt (c) im Bereich von 53 - 68 Gew.-%, vorzugsweise im Bereich von 60 - 65 Gew.-% liegt.

5. Verfahren nach einem der vorhergehenden Ansprüche, wobei die verdaulichen Kohlenhydrate, wie zum Beispiel Laktose und/oder Maltodextrin, in Schritt (d) als Trockenpulver hinzugefügt werden und die Ballaststoffe als Trockenpulver oder als konzentrierte Flüssigkeit hinzugefügt werden.

6. Verfahren nach einem der vorhergehenden Ansprüche, wobei das gesamte Verfahren, mit Ausnahme der Wärmebehandlung von Schritt (a), 75 °C nicht überschreitet.

7. Verfahren nach einem der vorhergehenden Ansprüche, wobei die Wärmebehandlung von Schritt (a) darauf ausgelegt ist, eine mikrobiell sichere Proteinkomponente zu erhalten und vorzugsweise durch Pasteurisierung, UHT, HTST oder ESL, besonders bevorzugt durch Pasteurisierung ausgeführt wird.

8. Verfahren nach einem der vorhergehenden Ansprüche, wobei die wässrige Mischung von Schritt (a) einen Gesamtfeststoffgehalt im Bereich von 15 - 40 Gew.-%, vorzugsweise im Bereich von 20 - 35 Gew.-%, am bevorzugtesten im Bereich von 25 - 32 Gew.-% aufweist.

9. Verfahren nach einem der vorhergehenden Ansprüche, wobei die wässrige Mischung, die Schritt (b) unterzogen wird, einen Gesamtfeststoffgehalt im Bereich von 35 - 60 Gew.-%, vorzugsweise im Bereich von 40 - 55 Gew.-%, am bevorzugtesten im Bereich von 45 - 51 Gew.-% vor dem Mischen mit der Lipidkomponente aufweist.

**10.** Verfahren nach einem der vorhergehenden Ansprüche, wobei der Gesamtfeststoffgehalt der wässrigen Mischung, die in Schritt (a) erhalten wird, vorzugsweise durch einen Verdampfungsschritt vor dem Mischen mit der Lipidkomponente erhöht wird.

**11.** Verfahren nach einem der vorhergehenden Ansprüche, wobei Magermilch und/oder Molkenproteinkonzentrat (WPC) als Quelle der Proteinkomponente und Kohlenhydratkomponente der wässrigen Mischung verwendet werden, die Schritt (a) unterzogen wird.

**12.** Verfahren nach einem der vorhergehenden Ansprüche, wobei die Kohlenhydratkomponente in Schritt (a) Laktose umfasst, wobei die Laktose zwischen 15 und 75 Gew.-% des gesamten Laktosegehalts des Säuglingsnahrungsprodukts ausmacht, das in Schritt (e) hergestellt wird, wobei vorzugsweise der Rest der Laktose während Schritt (d) und/oder Schritt (e) hinzugefügt wird.

**13.** Verfahren nach einem der vorhergehenden Ansprüche, wobei das verdauliche Kohlenhydrat, das während Schritt (d) hinzugefügt wird, Laktose umfasst und die Menge an Laktose, die während Schritt (d) hinzugefügt wird, zwischen 0 und 80 Gew.-% (auf Trockengewichtsbasis) der Gesamtmenge an Laktose liegt, die in dem Säuglingsnahrungsprodukt enthalten ist, das in Schritt (e) erhalten wird, vorzugsweise zwischen 25 und 50 Gew.-%; und/oder wobei das verdauliche Kohlenhydrat, das während Schritt (d) hinzugefügt wird, Laktose umfasst und die Menge an Laktose, die während Schritt (d) hinzugefügt wird, zwischen 0 und 40 Gew.-% des Gesamttrockengewichts des Säuglingsnahrungsprodukts liegt, das in Schritt (e) erhalten wird, vorzugsweise zwischen 0 und 30 Gew.-%.

**14.** Säuglingsnahrungsprodukt, das nach dem Verfahren nach einem der Ansprüche 1 - 13 erhalten werden kann.

**15.** Säuglingsnahrungsprodukt nach Anspruch 14, das eine Säuglingsnahrung, eine Folgenahrung, eine Kleinkindmilch oder eine Aufwuchsmilch ist; und/oder wobei das extrudierte Material schon ernährungsphysiologisch vollständig ist, wenn es den Extruder verlässt, und ernährungsphysiologisch als Säuglingsnahrung qualifiziert ist.

**Revendications**

**1.** Procédé pour fabrication d'un produit de préparation pour nourrissons comprenant les étapes suivantes :

(a) soumettre un mélange aqueux ayant un composant de protéine et un composant de carbohydrate à une étape de traitement thermique,
(b) mélanger le mélange aqueux avec un composant de lipide,
(c) soumettre le mélange aqueux comprenant le composant de lipide, le composant de carbohydrate et le composant de protéine traité thermiquement à une étape d'homogénéisation et d'émulsification pour obtenir une émulsion huile-dans-eau homogénéisée ayant une teneur totale en solides comprise entre 45 et 73 % en poids ;
(d) transporter l'émulsion homogénéisée dans une extrudeuse, ajouter indépendamment des carbohydrates digestibles et facultativement des fibres alimentaires à l'extrudeuse et extruder le contenu de l'extrudeuse où un gaz est injecté dans l'extrudeuse, pour obtenir un matériau aéré extrudé ;
(e) préparer un produit de préparation pour nourrissons à partir du matériau aéré extrudé,

où l'extrusion de l'étape (d) est effectuée à une température inférieure à 75 °C et où le matériau aéré extrudé contient substantiellement toutes les protéines et/ou lipides qui sont nutritionnellement requis pour une préparation pour nourrissons.

**2.** Procédé selon la revendication 1, où l'étape (e) implique un séchage par pulvérisation du matériau extrudé.

**3.** Procédé selon l'une quelconque des revendications précédentes, où le composant de protéine de la préparation pour nourrissons a un rapport pondéral de protéine de lactosérum à la caséine compris entre 9/1 et 1/9, de préférence compris entre 5/1 et 1/5, plus préférablement compris entre 3/1 et 1/1, le plus préférablement environ 6/4.

**4.** Procédé selon l'une quelconque des revendications précédentes, où la teneur totale en solides de l'émulsion huile-dans-eau homogénéisée de l'étape (c) est comprise entre 53 et 68 % en poids, de préférence comprise entre 60 et 65 % en poids.

**5.** Procédé selon l'une quelconque des revendications précédentes, où les carbohydrates digestibles, tels que lactose et/ou maltodextrine, sont ajoutés à l'étape (d) comme une poudre sèche et les fibres alimentaires sont ajoutées comme une poudre sèche ou comme un liquide concentré.

**6.** Procédé selon l'une quelconque des revendications précédentes, où le procédé entier, à l'exception du traitement thermique de l'étape (a), n'excède pas 75 °C.

**7.** Procédé selon l'une quelconque des revendications précédentes, où le traitement thermique de l'étape (a) est conçu pour obtenir un composant de protéine de sécurité de microbes et est de préférence réalisé par pasteurisation, UHT, HTST ou ESL, plus préférablement par pasteurisation.

**8.** Procédé selon l'une quelconque des revendications précédentes, où le mélange aqueux de l'étape (a) a une teneur totale en solides comprise entre 15 et 40 % en poids, de préférence comprise entre 20 et 35 % en poids, plus préférablement comprise entre 25 et 32 % en poids.

**9.** Procédé selon l'une quelconque des revendications précédentes, où le mélange aqueux soumis à l'étape (b) a une teneur totale en solides comprise entre 35 et 60 % en poids, de préférence comprise entre 40 et 55 % en poids, plus préférablement comprise entre 45 et 51 % en poids avant le mélange avec le composant de lipide.

**10.** Procédé selon l'une quelconque des revendications précédentes, où la teneur totale en solides du mélange aqueux obtenu à l'étape (a) est augmentée, de préférence par une étape d'évaporation, avant le mélange avec le composant de lipide.

**11.** Procédé selon l'une quelconque des revendications précédentes, où du lait écrémé et/ou un concentré de protéines de lactosérum (WPC) sont utilisés comme source du composant de protéine et du composant de carbohydrate du mélange aqueux soumis à l'étape (a).

**12.** Procédé selon l'une quelconque des revendications précédentes, où le composant de carbohydrate de l'étape (a) comprend du lactose, lequel lactose constitue entre 15 et 75 % en poids de la teneur totale en lactose du produit de préparation pour nourrissons préparé à l'étape (e), de préférence où le reste du lactose est ajouté pendant l'étape (d) et/ou l'étape (e).

**13.** Procédé selon l'une quelconque des revendications précédentes, où le carbohydrate digestible qui est ajouté pendant l'étape (d) comprend du lactose et la quantité de lactose ajoutée pendant l'étape (d) se trouve entre 0 et 80 % en poids (sur la base de poids sec) de la quantité totale de lactose contenue dans le produit de préparation pour nourrissons obtenu à l'étape (e), de préférence entre 25 et 50 % en poids ; et/ou où le carbohydrate digestible qui est ajouté pendant l'étape (d) comprend du lactose et la quantité de lactose qui est ajoutée pendant l'étape (d) se trouve entre 0 et 40 % en poids du poids sec total du produit de préparation pour nourrissons obtenu à l'étape (e), de préférence entre 0 et 30 % en poids.

**14.** Produit de préparation pour nourrissons obtenu par le procédé selon l'une quelconque des revendications 1 à 13.

**15.** Produit de préparation pour nourrissons selon la revendication 14, qui est une préparation pour nourrissons, une préparation de suite, un lait pour enfant ou un lait de croissance ; et/ou où le matériau extrudé est déjà complet nutritionnellement lorsqu'il sort de l'extrudeuse et qualifie nutritionnellement comme une préparation pour nourrissons.

19

Fig. 1

Fig. 2

**EP 3 982 744 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006094995 A
- WO 201115965653 A
- WO 2014066680 A
- WO 2014164956 A
- US 2008241337 A
- US 2015296867 A
- US 2017202864 A
- US 8268378 B
- US 5596815 A

**Non-patent literature cited in the description**

- **BOUVIER et al.** *Dairy Sci & Technol.,* 2013, vol. 93, 387-399